# EUROPÄISCHE PATENTSCHRIFT

(11) **EP 1 048 098 B1**
(45) Veröffentlichungstag und Bekanntmachung des Hinweises auf die Patenterteilung: **14.05.2003**
(21) Anmeldenummer: 98965870.3
(22) Anmeldetag: 23.12.1998
(51) Int. Cl.: H02B 1/30

(54) **VORRICHTUNG ZUM VERBINDEN VON ANREIHBAREN SCHALTSCHRÄNKEN**
DEVICE FOR CONNECTING ATTACHABLE SWITCHGEAR CABINETS
DISPOSITIF POUR ASSEMBLER DES ARMOIRES DE DISTRIBUTION JUXTAPOSABLES

(30) Priorität: 15.01.1998 DE 19801185
(43) Veröffentlichungstag der Anmeldung: 02.11.2000
(73) Patentinhaber: Rittal-Werk Rudolf Loh GmbH & Co. KG, 35745 Herborn (DE)
(72) Erfinder: ROOT, Paul, D-35080 Bad Endnach (DE)
(74) Vertreter: Fleck, Hermann-Josef, Dr.-Ing.
(86) Internationale Anmeldenummer: EP9808435
(87) Internationale Veröffentlichungsnummer: WO99037004

(56) Entgegenhaltungen:
- DE-A- 1 753 051

## Beschreibung

Die Erfindung betrifft eine Vorrichtung zum Verbinden von anreihbaren Schaltschränken, die aus Rahmenschenkeln zusammengesetze Rahmengestelle aufweisen und zu den Verbindungsebenen hin Verbindungsrahmen bilden, wobei die Rahmenschenkel aus Hohlprofilabschnitten bestehen, die mit zum Innenraum des Schaltschrankes gerichteten Profilseiten ausgestattet sind, wobei einander zugeordnete Rahmenschenkel der aneinandereihbaren Rahmengestelle mittels eines oder mehreren Verbindern, die an Befestigungsaufnahmen der Profilseiten festgelegt sind formschlüssig miteinander verbunden sind.

Eine solche Vorrichtung ist aus der EP 0 189 061 A1 bekannt. Hierbei werden an den benachbarten Rahmenschenkel der aneinander gereihten Rahmenschenkel getrennte Spannwinkel befestigt. Auf diese kann ein Spannschieber aufgeschoben werden. Die Spannwinkel und der Spannschieber bilden eine sich konisch verjüngende Keilverbindung, die die Rahmenschenkel gegeneinander verspannt.

Bei großen Fertigungsanlagen ist die Anlagensteuerung in Schaltschränken untergebracht. Da das Volumen eines einzelnen Schaltschrankes nicht ausreicht, werden mehrere Schaltschränke aneinandergereiht. Im Laufe der Zeit ändern sich die Funktionsabläufe der Fertigungsanlage, so daß die Anlagensteuerung ständig nachgerüstet werden muß. Da sich während dieses Zeitablaufes auch die Schaltschranktechnik weiterentwickelt und als Resultat daraus andere Schaltschranktypen entstehen, wird eine zweite Zeile von Schaltschränken neben der ersten aufgestellt. Um die Kommunikation zwischen den beiden Zeilen zu ermöglichen, werden entsprechende Kabel, Versorgungsleitungen etc. gelegt. Wenn die Fertigungsanlage umgebaut wird, dann müssen auch die Schaltschrankzeilen versetzt werden. über die Verbindungselemente sollte es dann gewährleistet sein, daß eine gesamte Zeile von einem Kran gegriffen und versetzt werden kann.

Es ist Aufgabe der Erfindung, eine Vorrichtung der eingangs erwähnten Art zu schaffen, mit der der schaltschrankseitige Aufwand für die Um- und Aufrüstung einer Fertigungsanlage verringert ist.

Diese Aufgabe wird dadurch gelöst, daß die mit dem Verbinder verbundenen Rahmenschenkel unterschiedliche Querschnittsgeometrien aufweisen, daß der Verbinder mit einem ersten Fixierelement in einer Befestigungsaufnahme des ersten Rahmenprofiles festgelegt ist, und daß der Verbinder mit einem Spannelement an dem zweiten Rahmenprofil angreift.

Erfindungsgemäß ist es also vorgesehen, daß unterschiedliche Rahmenprofile und damit auch unterschiedliche Schaltschranktypen aneinandergereiht werden können. Bei einer Aufrüstung einer Fertigungsanlage müssen damit nicht mehrere Zeilen von Schaltschränken gebildet werden. Dies ermöglicht es auch den Aufwand für die Umrüstung einer Fertigungsanlage gering zu halten, denn es muß nur noch eine Zeile von Schaltschränken gehandhabt werden.

Nach einer bevorzugten Ausgestaltungsvariante der Erfindung ist es vorgesehen, daß der Verbinder einteilig ausgebildet ist und das als Befestigungsschraube ausgebildete Spannelement in einer Gewindeaufnahme trägt, wobei die Mittellängsachse der Gewindeaufnahme rechtwinklig zu der Verbindungsebene angeordnet ist. Dieser einfache ausgestaltete Verbinder kann kostengünstig gefertigt werden und ermöglicht darüberhinaus eine hochfeste Verspannung der beiden Rahmenprofile. Mit der Befestigungsschraube kann die Spannkraft günstigerweise vertikale auf die Verbindungsebene ausgeübt werden.

Wenn es vorgesehen ist, daß die aneinandergereihten Rahmenprofile jeweils eine Profilseite aufweisen, die zum Innenraum des Schaltschrankes gerichtet ist und senkrecht zu der Verbindungsebene steht, und daß der Verbinder zwei Schenkel aufweist, die zueinander parallel stehen und mit ebenen Anlageflächen an den Profilseiten anliegen, dann können die beiden Rahmenprofile mittels des Verbinders exakt gegeneinander ausgerichtet werden.

Dies ist insbesondere auch dann möglich, wenn es vorgesehen ist, daß die Profilseiten parallel gegeneinander versetzt sind. Dann sind die beiden Schenkel des Verbinders mittels eines Angleichstückes, welches im Bereich der Verbindungsebene angeordnet ist, ineinander übergeleitet. Um den Verbinder sicher zu fixieren ist es nach einer bevorzugten Ausgestaltungsvariante der Erfindung vorgesehen, daß dieser mit seinem als Haken ausgebildeten ersten Fixierelement in eine Befestigungsaufnahme des ersten Rahmenprofiles eingehangen ist und sich an dieser parallel zur Verbindungsebene formschlüssig abstützt, und daß das Spannelement an einer parallel zur Verbindungsebene verlaufenden Profilseite angreift und an dieser ebenfalls parallel zur Verbindungsebene formschlüssig gehalten ist. Die formschlüssige Fixierung sowohl des ersten Fixierelementes als auch der Befestigungsschraube verhindert, daß sich der Verbinder unbeabsichtigt aus seiner Spannposition lösen kann, so daß eine sichere Verbindung der aneinandergereihten Rahmenprofile stets gewährleistet ist.

Hierbei kann es erfindungsgemäß auch vorgesehen sein, daß das als Befestigungsschraube ausgebildete Spannelement einen Zentrierzapfen trägt, der in eine Befestigungsbohrung des zweiten Rahmenprofiles eingreift.

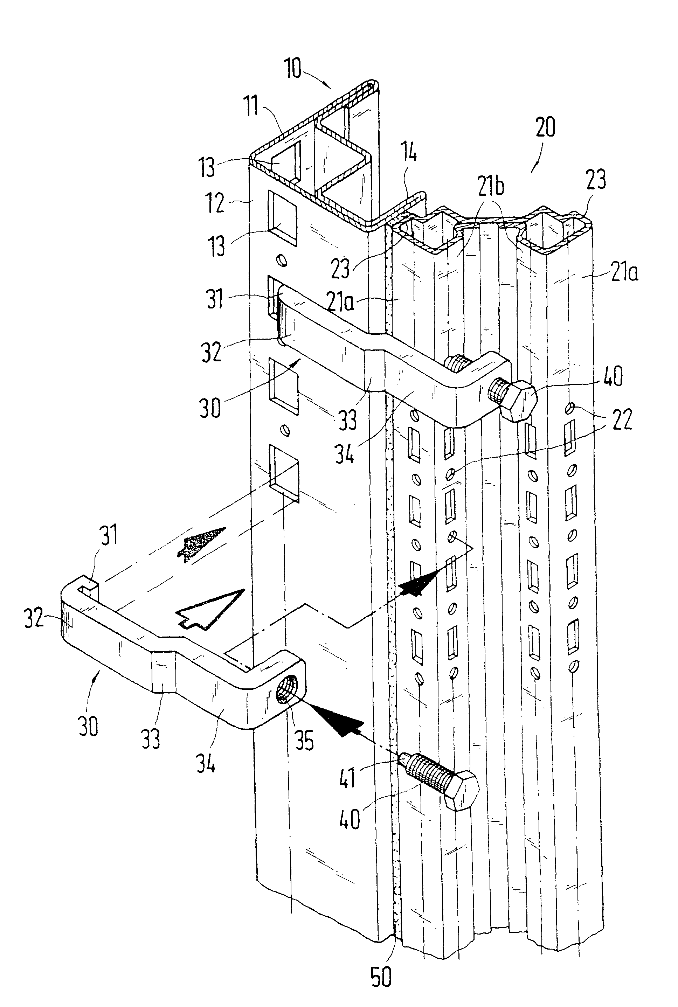

Die Erfindung wird im folgenden anhand eines in den Zeichnungen dargestellten Ausführungsbeispieles näher erläutert. Die Zeichnung zeigt zwei aneinandergereihte Rahmenprofile 10, 20 die mittels zweier Verbinder 30 gegeneinander fixiert sind. Das erste Rahmenprofil 10 weist zwei rechtwinklig zueinanderstehende Profilseiten 11, 12 auf, die zum Innenraum des Schaltschrankes gerichtet sind. Die Profilseite 11 geht an ihrem freien Enden in eine vertikal verlaufende Anlagekante über. Die Profilseite 12 ist endseitig rechtwinklig abgebogen und bildet einen Dichtsteg 14, der ebenfalls vertikal verläuft. In die beiden Profilseiten 11, 12 sind Reihen von in gleicher Teilung zueinander beabstandeten Befestigungsaufnahmen 13 eingebracht. An den Befestigungsaufnahmen 13 lassen sich Anbauten im Innenraum des Schaltschrankes fixieren.

Das zweite Rahmenprofil 20 weist eine andere Querschnittsgeometrie als das erste Rahmenprofil 10 auf. Es besitzt vier Profilseiten 21a, 21b, die alle zu dem Innenraum des Schaltschrankes orientiert sind. Die Profilseiten 21a stehen jeweils rechtwinklig zu den von dem zweiten Rahmenprofil gebildeten Profil-außenseiten. Die Profilseiten 21b schließen sich jeweils rechtwinklig an die Pro-filseiten 21a und bilden eine Innenaufnahme, in der vertikal verlaufende Montageschienen angebaut werden können. In die einzelnen Profilseiten 21a, 21b ist jeweils eine Reihe von Befestigungsaufnahmen 22 eingebracht. Die Befestigungsaufnahmen 22 sind dabei wechselweise als Bohrungen und schlitzförmige Durchbrüche ausgebildet. Von den Profilseiten 21a sind rechtwinklig Dichtstege 23 abgekantet. Im Bereich eines der beiden Dichtstege 23 kann das zweite Rahmenprofil 20 an den Dichtsteg 14 des ersten Rahmenprofiles 10 angereiht werden. Zwischen den beiden Dichtstegen 23, 14 ist dabei eine Dichtung 50 gehalten.

Zur sicheren Verbindung der beiden Rahmenprofile, 10, 20 sind Verbinder 30 verwendet. Der Verbinder 30 weist ein erstes Fixierelement 31 auf, das in Form eines Hakens ausgebildet ist. An dieses Fixierelement 31 schließt sich ein Schenkel 32 an, der mittels eines Angleichstückes 33 in einen weiteren Schenkel 34 übergeht. Von dem weiteren Schenkel 34 ist ein Ansatz abgekantet, der eine Gewindeaufnahme 35 trägt. Mittels des Fixierelementes 31 kann der Verbinder 30 in eine der Befestigungsaufnahmen 13 der Profilseite 12 eingehangen werden. Der Schenkel 32 weist eine ebene Anlagefläche auf, mit der er an der Profilseite 12 anliegt. Der zweite Schenkel 34 besitzt ebenfalls eine ebene Anlagefläche, die an der Profilseite 21a des zweiten Rahmenprofiles 20 flächig anliegt. Die beiden Profilseiten 12 und 21a sind parallel zueinander versetzt. Dieser Versatz wird mit den Angleichstück 33 ausgeglichen. Dadurch, daß die Anlagenflächen der beiden Schenkel 32, 34 zueinander parallel sind, werden auch die Profilseiten 12 und 21a (und damit auch die Rahmenprofile 10, 20) gegeneinander ausgerichtet. In die Gewindeaufnahme 35 des Verbinders 30 kann eine Befestigungsschraube 40 eingeschraubt werden. Die Befestigungs-schraube 40 trägt an ihrem Ende einen Zentrierzapfen 41. Beim Einschrauben der Befestigungsschraube 40 tritt der Zentrierzapfen 41 in eine der Be-festigungsaufnahmen 22 des zweiten Rahmenprofiles 20 ein. Mit dem Zentrierzapfen 41 wird der Verbinder 30 so an dem zweiten Rahmenprofil fest-gelegt, daß er nicht mehr parallel zur Verbindungsebene versetzt werden kann. Das erste Fixierelemente 31 erfüllt die gleiche Funktion. Wenn die Befestigungsschraube 40 in die Gewindeaufnahme 35 eingeschraubt wird, werden die beiden Rahmenprofile 10, 20 gegeneinander gespannt und die Dichtung 50 um das erforderliche Maß gestaucht.

## Patentansprüche

1. Vorrichtung zum Verbinden von anreihbaren Schaltschränken, die aus Rahmenprofilen (10,20) zusammengesetzte Rahmengestelle aufweisen und zu den Verbindungsebenen hin Verbindungsrahmen bilden, wobei die Rahmen-profile (10,20) mit zum Innenraum des Schaltschrankes gerichteten Profil-seiten (11,12,21a,21b) ausgestattet sind, und wobei einander zugeordnete Rahmenprofile (10,20) der aneinandergereihten Rahmengestelle mittels eines oder mehreren Verbindern (30), die an Befestigungsaufnahmen (13) der Profilserten (11,12,21a,21b) festgelegt sind, formschlüssig miteinander verbunden sind,
**dadurch gekennzeichnet,**
**daß** die mit dem Verbinder (30) verbundenen Rahmenschenkel (10, 20) unterschiedliche Querschnittsgeometrien aufweisen, daß der Verbinder (30) mit einem ersten Fixierelement (31) in einer Befestigungsaufnahme (13) des ersten Rahmenprofiles (10) festgelegt ist, und
**daß** der Verbinder (30) mit einem Spannelement (40) an dem zweiten Rahmenprofil (20) angreift.

2. Vorrichtung nach Anspruch 1,
**dadurch gekennzeichnet,**
**daß** der Verbinder (30) einteilig ausgebildet ist und das als Befestigungsschraube ausgebildete Spannelement (40) in einer Gewindeaufnahme (35) trägt, wobei die Mittellängsachse der Gewindeaufnahme (35) rechtwinklig zu der Verbindungsebene angeordnet ist.

3. Vorrichtung nach Anspruch 1 oder 2,
**dadurch gekennzeichnet,**
**daß** die aneinandergereihten Rahmenprofile (10, 20) jeweils eine Profilseite (12, 21a) aufweisen, die zum Innenraum des Schaltschrankes gerichtet ist und senkrecht zu der Verbindungsebene steht, und
**daß** der Verbinder (30) zwei Schenkel (32, 34) aufweist, die zueinander parallel stehen und mit ebenen Anlageflächen an den Profilseiten (21a, 12) anliegen.

4. Vorrichtung nach Anspruch 3,
**dadurch gekennzeichnet,**
**daß** die Profilseiten (12, 21a) parallel gegeneinander versetzt sind, und
**daß** die beiden Schenkel (32, 34) des Verbinders (30) mittels eines Angleichstückes (33), welches im Bereich der Verbindungsebene angeordnet ist, ineinander übergeleitet sind.

5. Vorrichtung nach einem der Ansprüche 1 bis 4,
**dadurch gekennzeichnet,**
**daß** der Verbinder (30) mit seinem als Haken ausgebildeten ersten Fixierlement in eine Befestigungsaufnahme (13) des ersten Rahmenprofils (10) eingehangen ist und sich an dieser parallel zur Verbindungsebene formschlüssig abstützt, und
**daß** das Spannelement (40) an einer parallel zur Verbindungsebene verlaufenden Profilseite (21b) angreift und an dieser ebenfalls parallel zur Verbindungsebene formschlüssig gehalten ist.

6. Vorrichtung nach Anspruch 5,
**dadurch gekennzeichnet,**
**daß** das als Befestigungsschraube ausgebildete Spannelement (40) einen Zentrierzapfen (41) trägt, der in eine Befestigungsbohrung des zweiten Rahmenprofiles (20) eingreift.

## Claims

1. Arrangement for connecting switch cabinets which can be lined up one beside the other, have frameworks made up of frame profiles (10, 20) and form connecting frames in the direction of the connecting planes, the frame profiles (10, 20) being provided with profile sides (11, 12, 21a, 21b) directed towards the interior of the switch cabinet, and associated frame profiles (10, 20) of the frameworks which are lined up one beside the other being connected to one another in a form-fitting manner by means of one or more connectors (32), which are secured on fastening mounts (13) of the profile sides (11, 12, 21a, 21b), **characterized in that** the frame legs (10, 20) connected to the connector (30) have different cross-sectional geometries, **in that** the connector (30) is secured in a fastening mount (13) of the first frame profile (10) by way of a first fixing element (31), and **in that** the connector (30) acts on the second frame profile (20) by way of a clamping element (40).

2. Arrangement according to Claim 1, **characterized in that** the connector (30) is of single-part design and bears the clamping element (40), designed as a fastening screw, in a threaded mount (35), the centre longitudinal axis of the threaded mount (35) being arranged at right angles to the connecting plane.

3. Arrangement according to Claim 1 or 2,
**characterized in that** the frame profiles (10, 20) lined up one beside the other each have a profile side (12, 21a) which is directed towards the interior of the switch cabinet and is located perpendicularly to the connecting plane, and **in that** the connector (30) has two legs (32, 34), which are located parallel to one another and butt against the profile sides (21a, 12) by way of planar abutment surfaces.

4. Arrangement according to Claim 3, **characterized in that** the profile sides (12, 21a) are offset in relation to one another, parallel to one another, and **in that** the two legs (32, 34) of the connector (30) are made to merge into one another by means of an adapter (33), which is arranged in the region of the connecting plane.

5. Arrangement according to one of Claims 1 to 4, **characterized in that** the connector (30) is fitted into a fastening mount (13) of the first frame profile (10) by way of its first fixing element, designed as a hook, and is supported in a form-fitting manner on said fastening mount parallel to the connecting plane, and **in that** the clamping element (40) acts on a profile side (21b) running parallel to the connecting plane and is retained in a form-fitting manner thereon likewise parallel to the connecting plane.

6. Arrangement according to Claim 5, **characterized in that** the clamping element (40), designed as a fastening screw, bears a centring stub (41) which engages in a fastening bore of the second frame profile (20).

## Revendications

1. Dispositif pour assembler des armoires de distribution juxtaposables qui présentent des structures de cadre constituées de profilés de cadre (10, 20) et qui forment des cadres d'assemblage vers les plans de connexion, les profilés de cadre (10, 20) étant pourvus de côtés profilés (11, 12, 21a, 21b) orientés vers l'espace intérieur de l'armoire de distribution, et où des profilés de cadre (10, 20) associés les uns aux autres des structures de cadre juxtaposées sont connectés les uns aux autres par engagement positif au moyen d'une ou de plusieurs liaisons (30) qui sont fixées sur les logements de fixation (13) des côtés profilés (11, 12, 21a, 21b),
**caractérisé en ce que**
les branches de cadre (10, 20) connectées aux liaisons (30) présentent différentes géométries en section transversale, **en ce que** les liaisons (30) sont fixées avec un premier élément de fixation (31) dans un logement de fixation (13) du premier profilé de cadre (10), et
**en ce que** la liaison (30) vient en prise avec un élément de serrage (40) sur le deuxième profilé de cadre (20).

2. Dispositif selon la revendication 1,
**caractérisé en ce que**
la liaison (30) est réalisée d'une pièce et porte l'élément de serrage (40) réalisé en tant que vis de fixation dans un logement fileté (35), l'axe longitudinal médian du logement fileté (35) étant disposé à angle droit par rapport au plan de connexion.

3. Dispositif selon la revendication 1 ou 2,
**caractérisé en ce que**
les profilés de cadre juxtaposés (10, 20) présentent chacun un côté profilé (12, 21a) qui est orienté vers l'espace intérieur de l'armoire de distribution et qui est perpendiculaire au plan de connexion, et **en ce que** la liaison (30) présente deux branches (32, 34) qui sont parallèles l'une à l'autre et qui s'appliquent avec des faces d'appui planes contre les côtés profilés (21a, 12).

4. Dispositif selon la revendication 3,
**caractérisé en ce que**
les côtés profilés (12, 21a) sont décalés parallèlement les uns aux autres, et **en ce que** les deux branches (32, 34) de la liaison (30) passent l'une dans l'autre au moyen d'une pièce d'égalisation (33) qui est disposée dans la région du plan de connexion.

5. Dispositif selon l'une quelconque des revendications 1 à 4,
**caractérisé en ce que**
la liaison (30) est accrochée avec son premier élément de fixation réalisé en tant que crochet dans un logement de fixation (13) du premier profilé de cadre (10) et s'appuie par engagement positif sur celui-ci parallèlement au plan de connexion, et
**en ce que** l'élément de serrage (40) vient en prise sur un côté profilé (21b) s'étendant parallèlement au plan de connexion et est maintenu par engagement positif contre celui-ci également parallèlement au plan de connexion.

6. Dispositif selon la revendication 5,
**caractérisé en ce que**
l'élément de serrage (40) réalisé en tant que vis de fixation porte un tourillon de centrage (41) qui vient en prise dans un alésage de fixation du deuxième profilé de cadre (20).
